# EUROPEAN PATENT APPLICATION

(11) **EP 4 322 593 A1**
(43) Date of publication of application: **14.02.2024**
(21) Application number: 22794974.0
(22) Date of filing: 28.04.2022
(51) Int. Cl.: H04W 24/02

(54) **COMMUNICATION METHOD AND APPARATUS**

(30) Priority: 30.04.2021 CN 202110486402
(71) Applicant: Huawei Technologies Co., Ltd., Shenzhen, Guangdong 518129 (CN)
(72) Inventor: PENG, Wenjie, Shenzhen, Guangdong 518129 (CN); PAN, Xiaodan, Shenzhen, Guangdong 518129 (CN)
(74) Representative: Isarpatent
(86) International application number: PCT/CN2022/089797
(87) International publication number: WO 2022/228504

(57) **Abstract**

This application provides a communication method and apparatus. The method includes: A first communication device sends first configuration information to a second communication device. The first configuration information includes identifier information used by the first communication device and a configuration of a physical uplink shared channel PUSCH and/or a configuration of a physical downlink control channel PDCCH. The first configuration information is used for communication between the second communication device and an access network device. The first communication device sends first information to the second communication device. The first information includes one or more of the following: uplink scheduling information, uplink transmission data, assistance information required for the uplink transmission data, and hybrid automatic repeat request HARQ process information. The first information is used for the communication between the second communication device and the access network device. In comparison with an existing higher layer protocol-based communication device cooperation technology, embodiments of this application perform relaying and forwarding at a lower layer (for example, a physical layer), and have better latency performance.

## Description

### TECHNICAL FIELD

This application relates to the field of communication technologies, and in particular, to a communication method and apparatus.

### BACKGROUND

In a communication system, to improve communication quality, appropriate relay UE (relay UE) may be selected for remote user equipment (user equipment, UE), to provide a relay service for the remote UE. Relay UE surrounding the remote UE may be discovered using a relay discovery (relay discovery) procedure, so that the relay UE that provides the relay service for the remote UE is selected.

For a scenario in which a latency of an interface between the remote UE and the relay UE is stable, how to improve coordination efficiency between the UEs is a problem to be urgently resolved.

### SUMMARY

Embodiments of this application provide a communication method and apparatus.

According to a first aspect, an embodiment of this application provides a communication method. The method may be performed by a terminal device, or may be performed by a component (for example, a processor, a chip, or a chip system) of the terminal device. The method includes: A first communication device sends first configuration information to a second communication device. The first configuration information includes identifier information used by the first communication device and a configuration of a physical uplink shared channel PUSCH and/or a configuration of a physical downlink control channel PDCCH. The first configuration information is used for communication between the second communication device and an access network device. By using the configuration information, the second communication device may relay uplink transmission data from the first communication device, to improve coordination efficiency between the UEs.

Optionally, the identifier information used by the first communication device includes a cell radio network temporary identifier C-RNTI and/or a group identifier Group ID. In this manner, the second communication device may identify the configuration information, to support relaying of the uplink transmission data from the first communication device, so as to improve coordination efficiency between UEs.

Optionally, the PUSCH configuration information (for example, carried in a PUSCH-Config information element) in the first configuration information that is sent to the second communication device may be configured by the access network device based on an uplink capability of the second communication device, and includes a PUSCH time domain allocation mode, a format (format) configuration, a demodulation reference signal (demodulation reference signal, DMRS) configuration, and the like. An RNTI is for scrambling the PUSCH. The configuration of the PUSCH is configured by the access network device for a frequency band of the second communication device. Based on the configuration information, the second communication device may encode and scramble a PUSCH sent to the access network device, and forward encoded data to the access network device. Based on the configuration information, the second communication device may relay the uplink transmission data from the first communication device, to improve coordination efficiency between UEs.

Optionally, the first configuration information sent to the second communication device may further include the PDCCH configuration information. Specifically, the PDCCH configuration information (for example, which may be carried in a PDCCH-Config information element) includes a control-resource set (control-resource set, CORESET), a search space (search space) configuration, and the like. An RNTI is for descrambling the PDCCH. The second communication device may receive a PDCCH from the radio access network device based on the PDCCH configuration information, and obtain, through decoding, DCI information, including uplink scheduling information UL grant, and assistance information that is required for sending data by UE, such as a slot format indicator (slot format indicator, SFI), a pre-emption indication (pre-emption indication, PI), and a power control command. The configuration of the PDCCH is configured by the access network device for a frequency band of the second communication device. Based on the configuration information, the second communication device may forward data from the first communication device to the access network device. In this manner, the second communication device may receive the configuration information from the access network device, to support relaying of the uplink transmission data from the first communication device, so as to improve coordination efficiency between UEs.

With reference to the first aspect, in some implementations of the first aspect, the first communication device sends first information to the foregoing second communication device. The first information includes one or more of the following: uplink scheduling information, the uplink transmission data, assistance information required for the uplink transmission data, and hybrid automatic repeat request HARQ process information. The first information is used for the communication between the second communication device and the access network device. By using the first information, the second communication device may obtain the uplink transmission data from the first communication device and relay the uplink transmission data to the access network device, to improve coordination efficiency between UEs.

Optionally, the uplink transmission data comes from a media access control MAC layer of the first communication device, and is sent to the second communication device via a coordinating link between the first communication device and the second communication device. In this manner, the second communication device may relay the uplink transmission data from the first communication device, to improve coordination efficiency between UEs.

Optionally, if the first configuration information includes the PDCCH configuration information, after receiving a UL grant corresponding to a CC 2, the first communication device may send corresponding uplink data (which is in a TB form), UE assistance information, and HARQ process configuration information to a non-3GPP physical layer of the second communication device, for relaying the uplink transmission data by the second communication device. The UE assistance information indicates information such as an SFI, a PI, and a power control command. In this embodiment of this application, the HARQ information may include some necessary information that is delivered by the MAC layer to the physical layer, for example, a transport block size (transport block size, TBS), a redundancy version (redundancy version, RV), and a HARQ process ID.

Optionally, if the first configuration information does not include the PDCCH configuration information, the second communication device cannot obtain the DCI information through decoding, to obtain the uplink scheduling information UL grant. After receiving a UL grant corresponding to a CC 2, the first communication device may send the UL grant to a non-3GPP physical layer of the second communication device.

Optionally, the first communication device first sends the HARQ process configuration information to the second communication device, and then the second communication device sends a HARQ process ID with a TB to the radio access network device. The radio access network device may feed back a received packet loss status to the first communication device or the second communication device in a manner of feeding back signaling (for example, acknowledgement/negative acknowledgement, ACK/NACK).

With reference to the first aspect, in some implementations of the first aspect, the first communication device receives information about a first frequency band of the second communication device. The information about the first frequency band is uplink transmission frequency band information supported by the second communication device. The information about the first frequency band may be a carrier identifier or a carrier index. This is not specifically limited in this application. By using the transmission frequency band information, the second communication device may report a transmission capability of the second communication device to the access network device, to improve uplink transmission efficiency.

Optionally, the first communication device may find that there are a plurality of surrounding second communication devices that can provide coordination. The first communication device may select one or more surrounding second communication devices based on a service requirement of the first communication device, for example, a requirement on an uplink traffic volume, a transmission rate, or a latency. The first communication device may select an optimal second communication device based on signal quality of the second communication device on an uplink (Uu link), a traffic volume of the second communication device, a capability and quality of a coordinating link, and other information. For example, one or more second communication devices with optimal signal quality may be selected. Alternatively, a second communication device with low service load may be selected if possible. Alternatively, in a wireless coordinating link scenario, a second communication device with good coordinating link quality is selected. Alternatively, a second communication device with a high coordinating link transmission rate is selected from a preferentially connected link if possible. In this manner, the first communication device may select an appropriate second communication device as relay UE, to improve uplink transmission efficiency.

With reference to the first aspect, in some implementations of the first aspect, the first communication device sends second information to the access network device. The second information includes the information about the first frequency band of the second communication device and information about a second frequency band of the first communication device. The information about the second frequency band is uplink transmission frequency band information supported by the first communication device. The information about the second frequency band may be a carrier identifier or a carrier index. A specific form of the information about the second frequency band is not specifically limited in this application. By sending the second information, the second communication device may report the transmission capability of the second communication device to the access network device, to improve uplink transmission efficiency.

Optionally, the second information further indicates that the second frequency band is a primary component carrier. Specifically, the second information includes uplink transmission frequency band information formed by a component carrier CC 1 and a component carrier CC 2. In addition, the second information may alternatively indicate that the CC 1 of the first communication device is the primary component carrier (primary component carrier, PCC), and is for configuring a PUCCH by the radio access network device.

Optionally, the second information further includes a transmission latency between the first communication device and the second communication device. Specifically, if an ideal backhaul link (ideal backhaul) is not between the first communication device and the second communication device, the UE further needs to report the transmission latency between the first communication device and the second communication device, to learn of a shortest latency required from receiving a scheduling signaling by the first communication device to sending uplink data on the CC carrier of the second communication device, so that the radio access network device can know when to receive the scheduled uplink data. The transmission latency between the first communication device and the second communication device may include a transmission latency of the coordinating link between the first communication device and the second communication device, and a processing latency of relaying and forwarding the data by the second communication device after the second communication device receives the data. The foregoing latency may be included in UE capability reporting information and sent to the access network device. All different relay devices cooperating with the first communication device respectively correspond to latency information. The foregoing latency may alternatively be included in the UE assistance information and reported to a network-side device. A specific latency manner of reporting the latency is not specifically limited in this application. In this manner, the access network device assists in uplink transmission configuration based on information about the latency, to support the second communication device in relaying the uplink transmission data of the first communication device, so as to improve uplink transmission efficiency.

With reference to the first aspect, in some implementations of the first aspect, second configuration information is received from the access network device. The second configuration information includes one or more of the following: a bearer configuration, a configuration of a PUCCH, the configuration of the PUSCH, and the configuration of the PDCCH. The PUCCH configuration may include: a PUSCH resource set (PUCCH-ResourceSet), a PUCCH format configuration, a DMRS-related configuration, a power control parameter configuration, and the like. The configuration of the PDCCH may include: a CORESET, a search space configuration, other configuration information used for PDCCH detection, and the like. The second configuration information may be configured by the access network device based on the uplink capability of the second communication device, and is used for the communication between the second communication device and the access network device.

With reference to the first aspect, in some implementations of the first aspect, the first communication device receives first scheduling information from the access network device. The first scheduling information includes the uplink scheduling information in the first information and the assistance information required for the uplink transmission data in the first information. The first communication device obtains the related assistance information via the first scheduling information, and sends the related assistance information to the second communication device, to support the second communication device in relaying the uplink transmission data of the first communication device, so as to improve uplink transmission efficiency.

Optionally, the first communication device receives the PDCCH from the radio access network device, and obtains, through decoding, the DCI information, including the uplink scheduling information UL grant, and the assistance information that is required for sending data by UE, such as the SFI, the PI, and the power control command. In this manner, the first communication device obtains the related assistance information, and sends the related assistance information to the second communication device, to support the second communication device in relaying the uplink transmission data of the first communication device, so as to improve uplink transmission efficiency.

Optionally, the radio access network device may separately schedule the CC 1 and the CC 2, to be specific, separately indicate UL grants of the CC 1 and the second communication device via different DCI. Alternatively, the radio access network device may combine UL grants of the CC 1 and the second communication device into one piece of DCI, and deliver the DCI to the first communication device via the PDCCH. In the DCI, an application carrier indicator (carrier indicator) indicates a UL grant and other information of a corresponding CC.

According to a second aspect, an embodiment of this application provides a communication method. The method may be performed by a terminal device, or may be performed by a component (for example, a processor, a chip, or a chip system) of the terminal device. The method includes: A second communication device receives first configuration information from a first communication device. The first configuration information includes identifier information used by the first communication device and a configuration of a PUSCH and/or a configuration of a PDCCH. The first configuration information is used for communication between the second communication device and an access network device. By using the configuration information, the second communication device may relay uplink transmission data from the first communication device, to improve coordination efficiency between the UEs.

Optionally, the identifier information used by the first communication device includes a cell radio network temporary identifier C-RNTI and/or a group identifier Group ID. In this manner, the second communication device may identify the configuration information, to support relaying of the uplink transmission data from the first communication device, so as to improve coordination efficiency between UEs.

Optionally, the PUSCH configuration information (for example, which may be carried in a PUSCH-Config information element) in the first configuration information that is received from the first communication device may be configured by the access network device based on an uplink capability of the second communication device, and includes a PUSCH time domain allocation mode, a format configuration, a DMRS configuration, and the like. An RNTI is for scrambling the PUSCH. Based on the configuration information, the second communication device may encode and scramble a PUSCH sent to the access network device, and forward encoded data to the access network device. By using the configuration information, the second communication device may relay the uplink transmission data from the first communication device, to improve coordination efficiency between UEs.

Optionally, the first configuration information received from the first communication device may further include the PDCCH configuration information. Specifically, the PDCCH configuration information (for example, which may be carried in a PDCCH-Config information element) includes a CORESET, a search space configuration, and the like. An RNTI is for descrambling the PDCCH. The second communication device may receive a PDCCH from the radio access network device based on the PDCCH configuration information, and obtain, through decoding, DCI information, including uplink scheduling information UL grant, and assistance information that is required for sending data by UE, such as an SFI, a PI, and a power control command. Based on the configuration information, the second communication device may forward data from the first communication device to the access network device.

With reference to the second aspect, in some implementations of the second aspect, first information is received from the first communication device. The first information includes one or more of the following: uplink scheduling information, uplink transmission data, assistance information required for the uplink transmission data, and hybrid automatic repeat request HARQ process information. The first information is used for the communication between the second communication device and the access network device. The first communication device obtains the related assistance information via the first scheduling information, and sends the related assistance information to the second communication device, to support the second communication device in relaying the uplink transmission data of the first communication device, so as to improve uplink transmission efficiency.

Optionally, the uplink transmission data comes from a media access control MAC layer of the first communication device, and is sent to the second communication device via a coordinating link between the second communication device and the first communication device.

Optionally, the uplink scheduling information, the uplink transmission data, the assistance information required for the uplink transmission data, and the hybrid automatic repeat request HARQ process information that are included in the first information may be sent by the first communication device to the second communication device via a same piece of first information, or may be sent by the first communication device to the second communication device via a plurality of pieces of first information.

Optionally, if the first configuration information includes the PDCCH configuration information, after receiving a UL grant corresponding to a CC 2, the first communication device may send corresponding uplink data (which is in a TB form), UE assistance information, and HARQ process configuration information to a non-3GPP physical layer of the second communication device, for relaying the uplink transmission data by the second communication device. The UE assistance information indicates information such as an SFI, a PI, and a power control command. In this manner, the first communication device obtains the related assistance information, and sends the related assistance information to the second communication device, to support the second communication device in relaying the uplink transmission data of the first communication device, so as to improve uplink transmission efficiency.

Optionally, if the first configuration information does not include the PDCCH configuration information, the second communication device cannot obtain the DCI information through decoding, to obtain the uplink scheduling information UL grant. After receiving a UL grant corresponding to a CC 2, the first communication device may send the UL grant to a non-3GPP physical layer of the second communication device.

Optionally, the first communication device first sends the HARQ process configuration information to the second communication device, and then the second communication device sends a HARQ process ID with a TB to the radio access network device. The radio access network device may feed back a received packet loss status to the first communication device or the second communication device in an ACK/NACK manner.

With reference to the second aspect, in some implementations of the second aspect, the second communication device sends the uplink transmission data to the access network device. The second communication device relays the uplink transmission data from the first communication device, to improve coordination efficiency between UEs.

Optionally, the uplink transmission data is obtained by the second communication device by performing physical layer processing on the uplink transmission data in the first information. The physical layer processing includes processes such as scrambling and encoding.

With reference to the second aspect, in some implementations of the second aspect, information about a first frequency band is sent to the first communication device. The information about the first frequency band is uplink transmission frequency band information supported by the second communication device and is used for uplink transmission of the uplink transmission data. By using the transmission frequency band information, the second communication device may report a transmission capability of the second communication device to the access network device, to improve uplink transmission efficiency.

Optionally, the second communication device sends the uplink transmission capability information of the second communication device to a surrounding first communication device. The first communication device may obtain information (which is mainly information about an ID of UE, and may further include indication information that indicates whether the UE is authorized to be used for coordination) about surrounding UE that may be used for coordination. The information about the ID is for identifying surrounding UE, in particular, in a scenario in which there are a plurality of second communication devices. The ID may be a C-RNTI of the second communication device, or may be a temporary ID allocated by the first communication device to the second communication device. This is not specifically limited in this application. The first communication device may further obtain an uplink capability (where the uplink capability mainly refers to an uplink CC of the UE, and may further include uplink transmission channel quality of the second communication device, service load information of the second communication device, and the like) of the surrounding UE that can be used for coordination, and select appropriate UE from the surrounding UE as the second communication device. In this manner, the second communication device may select an appropriate second communication device as relay UE, to improve uplink transmission efficiency.

With reference to the second aspect, in some implementations of the second aspect, first scheduling information is received from the access network device. The first scheduling information includes the uplink scheduling information and the assistance information required for the uplink transmission data. The first communication device obtains the related assistance information via the first scheduling information, and sends the related assistance information to the second communication device, to support the second communication device in relaying the uplink transmission data of the first communication device, so as to improve uplink transmission efficiency.

Optionally, the second communication device receives the PDCCH from the radio access network device, and obtains, through decoding, the DCI information, including the uplink scheduling information UL grant, and the assistance information that is required for sending data by UE, such as the SFI, the PI, and the power control command. In this manner, the first communication device obtains the related assistance information, and sends the related assistance information to the second communication device, to support the second communication device in relaying the uplink transmission data of the first communication device, so as to improve uplink transmission efficiency.

Optionally, the radio access network device may separately schedule the CC 1 and the CC 2, to be specific, separately indicate UL grants of the CC 1 and the second communication device via different DCI. Alternatively, the radio access network device may combine UL grants of the CC 1 and the second communication device into one piece of DCI, and deliver the DCI to the first communication device via the PDCCH. In the DCI, an application carrier indicator (carrier indicator) indicates a UL grant and other information of a corresponding CC.

According to a third aspect, an embodiment of this application provides an apparatus, to implement the method in any one of the first aspect or the possible implementations of the first aspect. The apparatus includes a corresponding unit or component configured to perform the foregoing method. The unit included in the apparatus may be implemented by using software and/or hardware. The apparatus may be, for example, a terminal, a network device, a server, or a centralized controller, or a chip, a chip system, or a processor that can support the terminal, the network device, the server, or the centralized controller in implementing the foregoing method.

According to a fourth aspect, an embodiment of this application provides an apparatus, to implement the method in any one of the second aspect or the possible implementations of the second aspect. The apparatus includes a corresponding unit or component configured to perform the foregoing method. The unit included in the apparatus may be implemented by using software and/or hardware. The apparatus may be, for example, a terminal, a network device, a server, or a centralized controller, or a chip, a chip system, or a processor that can support the terminal, the network device, the server, or the centralized controller in implementing the foregoing method.

According to a fifth aspect, an embodiment of this application provides an apparatus, including a processor. The processor is coupled to a memory. The memory is configured to store a program or instructions, and when the program or the instructions are executed by the processor, the apparatus is enabled to implement the method in any one of the first aspect or the possible implementations of the first aspect.

According to a sixth aspect, an embodiment of this application provides an apparatus, including a processor. The processor is coupled to a memory. The memory is configured to store a program or instructions, and when the program or the instructions are executed by the processor, the apparatus is enabled to implement the method in any one of the second aspect or the possible implementations of the second aspect.

According to a seventh aspect, an embodiment of this application provides a computer-readable storage medium. The computer-readable storage medium stores a computer program or instructions, and when the computer program or the instructions are executed, a computer is enabled to perform the method in any one of the first aspect or the possible implementations of the first aspect.

According to an eighth aspect, an embodiment of this application provides a computer-readable storage medium. The computer-readable storage medium stores a computer program or instructions, and when the computer program or the instructions are executed, a computer is enabled to perform the method in any one of the second aspect or the possible implementations of the second aspect.

According to a ninth aspect, an embodiment of this application provides a computer program product, including computer program code. When the computer program code is run on a computer, the computer is enabled to perform the method in any one of the first aspect or the possible implementations of the first aspect.

According to a tenth aspect, an embodiment of this application provides a computer program product, including computer program code. When the computer program code is run on a computer, the computer is enabled to perform the method in any one of the second aspect or the possible implementations of the second aspect.

According to an eleventh aspect, an embodiment of this application provides a chip, including a processor. The processor is coupled to a memory. The memory is configured to store a program or instructions, and when the program or the instructions are executed by the processor, the chip is enabled to implement the method in any one of the first aspect or the possible implementations of the first aspect.

According to a twelfth aspect, an embodiment of this application provides a chip, including a processor. The processor is coupled to a memory. The memory is configured to store a program or instructions, and when the program or the instructions are executed by the processor, the chip is enabled to implement the method in any one of the second aspect or the possible implementations of the second aspect.

According to a thirteenth aspect, an embodiment of this application provides a communication system, including the apparatus in the third aspect and the apparatus in the fourth aspect.

According to a fourteenth aspect, an embodiment of this application provides a communication system, including the apparatus in the fifth aspect and the apparatus in the sixth aspect.

### BRIEF DESCRIPTION OF DRAWINGS

FIG. 1 is a schematic diagram of a communication system to which an embodiment of this application is applied;
FIG. 2 is a schematic diagram of reporting a CA capability of UE;
FIG. 3 is a schematic diagram of an L3 U2N relay protocol architecture;
FIG. 4 is a schematic diagram of an L2 U2N relay protocol architecture;
FIG. 5 and FIG. 6 are schematic diagrams of several system frameworks to which an embodiment of this application is applicable;
FIG. 7 and FIG. 8 are schematic flowcharts of a communication method according to an embodiment of this application;
FIG. 9 is a schematic diagram of a structure of a communication apparatus according to an embodiment of this application;
FIG. 10 is a schematic diagram of a structure of a terminal according to an embodiment of this application; and
FIG. 11 is a schematic diagram of another communication apparatus according to an embodiment of this application.

### DESCRIPTION OF EMBODIMENTS

Before embodiments of this application are described, some terms in embodiments of this application are explained and described. It should be noted that the following explanations and descriptions are intended to make embodiments of this application easier to understand, and should not be construed as a limitation on the protection scope claimed in embodiments of this application.

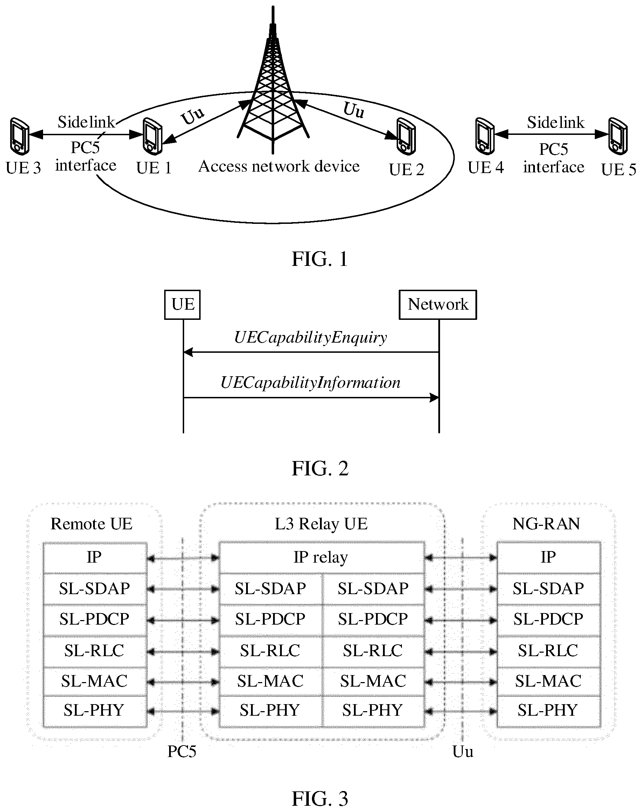

Sidelink (sidelink) communication is wireless communication in which devices directly communicate with each other without relaying their data via an access network device, for example, communication links between terminals as shown in FIG. 1. Sidelink communication can reduce a data transmission latency between devices, and improve a system capacity based on a cellular network. A link between UEs performing sidelink communication may be referred to as a sidelink (sidelink, SL) or a direct (direct) link, and an interface corresponding to the link may be referred to as a PC5 interface. Sidelink communication may be applied to a device-to-device (device-to-device, D2D) communication scenario. In the D2D communication scenario, sidelink communication may be described as D2D communication. Sidelink communication may also be applied to a vehicle-to-everything (vehicle-to-everything, V2X) communication scenario. In the V2X communication scenario, sidelink communication may be described as V2X communication.

Sidelink communication supports three communication modes: a unicast communication mode, a multicast communication mode, and a broadcast communication mode. The broadcast communication mode may mean that a transmitter (for example, Tx UE) sends broadcast data without encryption, and the broadcast data may be received and parsed by any interested receiver (for example, Rx UE) within an acceptable range. The multicast communication mode may mean that a transmitter may send multicast data to a receiver that belongs to a multicast group, and a receiver that does not belong to the multicast group does not receive or parse the multicast data. The unicast communication mode may mean that a unicast connection (for example, the sidelink) is established between a transmitter and a receiver. After the unicast connection is established, the transmitter sends unicast data to the receiver over the unicast connection, and only the receiver can receive and parse the unicast data.

Relay discovery (relay discovery) is a process in which remote user equipment discovers available relay user equipment surrounding the remote user equipment. The relay discovery may include the following two models: a model A (model A) and a model B. It should be understood that, in this application, a model may be described as a manner. Specifically, using the model A as an example, the relay discovery may include: UE, serving as a relay and surrounding the remote UE, broadcasts a discovery (discovery) message in the broadcast communication mode. The discovery message may be described as a broadcast message or an announcement (announcement) message. The discovery message may be used to notify the remote UE that the UE is optional relay UE. After monitoring (monitor)/receiving the discovery message, the remote UE discovers, based on the discovery message, the relay UE that may be connected to the remote UE.

A carrier aggregation (carrier aggregation, CA) technology is an important radio access network (radio access network, RAN) coordination technology. To increase a peak rate and meet a requirement of an enhanced mobile broadband (enhanced mobile broadband, eMBB) scenario, the carrier aggregation aggregates bandwidths of a plurality of cells to break through a performance limitation of a bandwidth of a single cell. The technology can aggregate a plurality of component carriers (component carriers, CCs) for one piece of UE to use, so that a bandwidth available to the UE is a sum of bandwidths of the plurality of component carriers, and a peak rate of the UE can be increased proportionally. Implementation of the CA is closely related to a UE capability. A CA capability that UE can actually obtain is based on both the UE and a CA capability of a base station connected to the UE. The CA capability of the UE mainly refers to a combination of bands that can be supported by the UE. FIG. 2 shows reporting of the CA capability of the UE. A base station queries a UE capability through UE Capability Enquiry signaling, and UE reports a CA capability to the base station through UE Capability Information signaling. Finally, the base station may correspondingly configure CA for the UE based on the capability reported by the UE.

UE-to-network (UE-to-Network, U2N) relay typically is a technology in which one UE helps another UE to communicate with a base station, which is also referred to as a relay (Relay) technology. In a communication architecture of the U2N relay, remote UE communicates with a base station through coordination with relay UE, and the remote UE communicates with the relay UE over a sidelink. In this case, if the remote UE simultaneously maintains communication between the remote UE and the base station, the coordination of the relay UE with the remote UE may bring performance gains. For example, user equipment A communicates with a network-side device through user equipment B. The user equipment B may forward data transmitted between the user equipment A and the network-side device, and may provide a relay service for the user equipment A. In this case, the equipment B needs to be within coverage of an access network device, in other words, the access network device provides a communication service for the equipment B. Coverage of the equipment A is not limited. The equipment A may be within the coverage of the access network device, or may be outside the coverage of the access network device.

The methods and the apparatuses provided in embodiments of this application may be applied to a communication system shown in FIG. 1. FIG. 1 is a schematic diagram of an architecture of a communication system to which an embodiment of this application is applied. As shown in FIG. 1, the communication system includes an access network device and a terminal device. The terminal device is shown as UE 1 and UE 2 in FIG. 1. The UE 1 performs data transmission with the UE 2 via the access network device. An interface corresponding to a communication link between the UE and the access network device may be referred to as a Uu interface or an air interface. In a network architecture based on sidelink communication, UEs may communicate with each other via a sidelink. In this embodiment of this application, the UEs that perform communication via the sidelink may be located in coverage of the access network device, that is, in an in-coverage (in-coverage) scenario, or may be located outside coverage of the access network device, that is, in an out-of-coverage (out-of-coverage) scenario. For example, in FIG. 1, the UE 1 and UE 3 may communicate with each other via a sidelink, and the access network device does not need to be passed through between the UE 1 and the UE 3. The UE 1 may be in the in-coverage scenario. For another example, in FIG. 1, UE 4 and UE 5 may communicate with each other via a sidelink, and both are in the out-of-coverage scenario. Remote UE may discover, using a relay discovery procedure, relay UE that can provide a relay service for the remote UE. The remote UE may establish a sidelink to the relay UE, and send uplink data to the relay UE via the sidelink. The relay UE sends the uplink data to the access network device. Correspondingly, the access network device may send downlink data to the relay UE, and the relay UE sends the downlink data to the remote UE via the sidelink, to improve data transmission performance. It should be understood that the uplink data may be data sent by the UE to the access network device, and the downlink data may be data sent by the access network device to the UE. Further, to improve data transmission performance between the user equipment and a network-side device (for example, the access network device), for example, to enhance coverage and improve a capacity, this application may be applied to a U2N relay communication scenario. In this embodiment of this application, U2N relay communication may be referred to as relay communication or indirect (indirect) communication, and a path corresponding to the U2N relay communication may be referred to as a relay path or an indirect path. FIG. 1 is merely a schematic diagram. The communication system may further include other network devices, for example, may further include a core network device and a wireless backhaul device, which are not shown in FIG. 1.

In this application, the network-side device (which may also be referred to as a network device) may be any device having a wireless transceiver function. The network-side device includes but is not limited to: an evolved NodeB (NodeB or eNB or eNodeB, evolved NodeB) in long term evolution (long term evolution, LTE), a base station (gNodeB or gNB) or a transmission reception point (transmission reception point, TRP) in NR, a subsequently evolved base station in the 3rd generation partnership project (3rd generation partnership project, 3GPP), an access node in a wireless-fidelity (wireless-fidelity, Wi-Fi) system, a wireless relay node, a wireless backhaul node, a core network device, and the like. The base station may be a macro base station, a micro base station, a pico base station, a small cell, a relay station, a balloon station, or the like. A plurality of base stations may support a network of a same technology described above, or may support networks of different technologies described above. The base station may include one or more co-site or non-co-site TRPs. Alternatively, the network device may be a server, a wearable device, a machine communication device, a vehicle-mounted device, a smart screen, or the like. The following uses an example in which the network device is the base station for description. If there are a plurality of network devices, the plurality of network devices may be base stations of a same type, or may be base stations of different types. The base station may communicate with the terminal device, or may communicate with the terminal device via a relay device. The terminal device may communicate with a plurality of base stations of different technologies. For example, the terminal device may communicate with a base station that supports an LTE network, may communicate with a base station that supports a 5th generation (5th generation, 5G) communication network, or may support dual connectivity to a base station in an LTE network and a base station in a 5G network.

In this application, the terminal may be a device having the wireless transceiver function, and may be deployed on land, including indoor or outdoor, to be handheld, wearable, or vehicle-mounted; or may be deployed on water (for example, on a ship); or may be deployed in air (for example, on an airplane, a balloon, or a satellite). The terminal may be a mobile phone (mobile phone), a tablet computer (Pad), a computer with the wireless transceiver function, a virtual reality (virtual reality, VR) terminal device, an augmented reality (augmented reality, AR) terminal device, a mixed reality (mixed reality, MR) terminal device, a terminal in industrial control (industrial control), a vehicle-mounted terminal device, a terminal in self driving (self driving), a terminal in assisted driving, a terminal in telemedicine (telemedicine), a terminal in a smart grid (smart grid), a terminal in transportation safety (transportation safety), a terminal in a smart city (smart city), a terminal in a smart home (smart home), and the like. An application scenario is not limited in this embodiment of this application. The terminal may also be sometimes referred to as a terminal device, user equipment (user equipment, UE), an access terminal device, a vehicle-mounted terminal, an industrial control terminal, a UE unit, a UE station, a mobile station, a mobile console, a remote station, a remote terminal device, a mobile device, a UE terminal device, a wireless communication device, a machine terminal, a UE agent, a UE apparatus, or the like. The terminal may be fixed or mobile.

In this embodiment of this application, user equipment that provides a relay service for a remote terminal may be referred to as a relay terminal, relay user equipment (relay UE) (or relay UE), coordinating UE (cooperation UE, CUE), or second UE. User equipment that communicates with an access network device via relay user equipment may be referred to as remote user equipment (remote UE) (or remote UE), service UE (service UE, SUE), or first UE. A sidelink may be established between the relay user equipment and the remote user equipment to perform sidelink communication. A coordinating link may alternatively be established between the relay user equipment and the remote user equipment, and communication is performed by using a non-3GPP physical layer. The coordinating link may be a communication link in a system such as Bluetooth, Wi-Fi, an optical fiber, or a cable. The non-3GPP physical layer corresponds to a physical layer of the coordinating link. This is not specifically limited in this application.

An existing U2N relay technology mainly includes two designs: a layer 2 (Layer 2, L2) and a layer 3 (Layer 3, L3). Rel-13 first introduces an L3-based relay technology, and a protocol stack of the L3-based relay technology is shown in FIG. 3. Using downlink as an example, a core network encapsulates an IP of remote UE into a data packet, and then notifies a base station of only an IP of relay UE. After receiving the data packet from the core network, the base station encrypts the data packet at a PDCP layer, and sends the data packet to an RLC layer, a MAC layer, and a PHY layer that are below the PDCP layer for layer-by-layer processing. Then, the base station sends the data packet to the relay UE through an air interface. After receiving the data packet, a PHY layer of the relay UE submits the data packet upward layer by layer for processing, and decrypts the data packet at a PDCP layer, to obtain the IP of the remote UE encapsulated in the data packet. Therefore, the decryption operation enables data of the remote UE to be exposed to the relay UE in a plaintext form. After obtaining the IP of the remote UE, the relay UE reencrypts the data packet, and then forwards the data packet to the remote UE via a sidelink. Based on the foregoing data forwarding procedure, it can be discovered that the L3 relay has the following problems:
1. The data of the remote UE is plaintext at the relay UE, and there is no privacy. As a result, there is a security problem. Even if application-layer encryption can be used to prevent such a risk, the encryption cannot be ensured at each application layer.
2. The forwarded data packet is unknown to the base station. The base station cannot control the forwarding behavior of the relay UE, and cannot ensure end-to-end quality of service (Quality of service, QoS). In particular, it is difficult for the L3 relay to ensure that a high requirement for service continuity and short-latency switching can be met.

In LTE Rel-14 and Rel-15, 3GPP further enhances the U2N relay to enable a wearable device to securely access a network, and enable the wearable device manageable, controllable, and reachable to the network. An enhanced technology of U2N relay is based on the L2 relay.

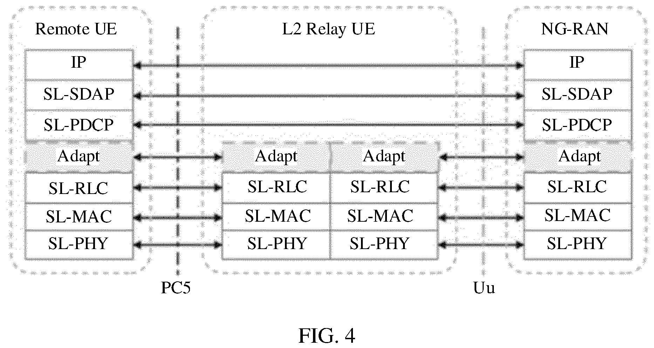

In the L2 relay, an address of remote UE is not encapsulated at an IP layer, but is notified to relay UE by a next generation NodeB (next generation NodeB, gNB) by carrying a message at a layer 1/layer 2. As shown in an L2 relay protocol stack in FIG. 4, a data packet of remote UE is relayed and forwarded below a PDCP layer. Using downlink as an example, relay UE receives a to-be-forwarded data packet and a corresponding control message from a base station. The control message includes a forwarding destination, for example, a UE ID of remote UE (where for security, the UE ID is usually not a radio network temporary identifier (radio network temporary identifier, RNTI) obtained by the remote UE in a network, but another set of UE ID used for coordination). After identifying the UE ID, the relay UE forwards the data packet to the corresponding remote UE. Because encryption/decryption processing is not performed on the forwarded data at the relay UE (where the encryption/decryption processing is performed at a PDCP layer), the relay UE only knows that the packet needs to be forwarded to the remote UE. Therefore, data security of the remote UE is ensured. Because the base station knows to whom the data packet is to be forwarded and who is going to forward the data packet, the gNB can flexibly control a forwarding path of the data packet and ensure QoS of a service.

In addition, an adaptation layer (adaptation layer) is added between a radio link control (radio link control, RLC) layer and the packet data convergence layer protocol (packet data convergence protocol, PDCP) layer in the protocol architecture, and is for multiplexing and splitting a bearer. For example, in a downlink direction, one bearer of a Uu link may include data sent by the base station to a plurality of remote UEs. By adding a remote UE ID to the data, the adaptation layer of the relay UE correctly maps, based on the remote UE ID, the data on the bearer of the Uu link to bearers of different remote UEs, to split the multiplexed data. However, for the existing L2 relay and L3 relay, the data packet needs to be processed at the RLC layer, the MAC layer, and the PHY layer at the relay. Therefore, relay efficiency of the existing L2 relay and L3 relay is not high, in particular, in a case in which a latency of a communication link is stable.

To resolve the foregoing technical problem, embodiments of this application provide a communication method and apparatus. In the method, service UE improves an uplink capability of a single user based on a CA technical principle through UE coordination. In embodiments of this application, a physical layer of coordinating UE relays transport block (transport block, TB) data delivered by a MAC layer of the service UE, and forwards the transport block data to a physical layer of a base station via an uplink of the coordinating UE.

In a scenario of embodiments of this application, both the SUE and the CUE have a limited uplink transmission capability. For example, the SUE or the CUE is reduced capability (reduced capability, Redcap) UE with only one transmission chain (Tx chain). It is assumed that the SUE has a transmission resource of a first component carrier (CC 1), and the CUE has a transmission resource of a second component carrier (CC 2). In embodiments, the SUE applies a capability of the CUE, to construct uplink CA of the CC 1 and the CC 2, and reports the uplink CA to a radio access network device, to enhance an uplink transmission capability of the SUE. In a data transmission process, if the SUE receives uplink scheduling information (for example, an uplink grant, UL grant) of the CC 1, the SUE generates a corresponding TB, and delivers the TB to a physical layer of the SUE to send the TB to the access network device. If the SUE receives a UL grant of the CC 2, the SUE generates a corresponding TB and sends the TB to the CUE, and the CUE sends the TB to the radio access network device. It may be understood that, in embodiments, the CC 1 and the CC 2 may be same or may be different.

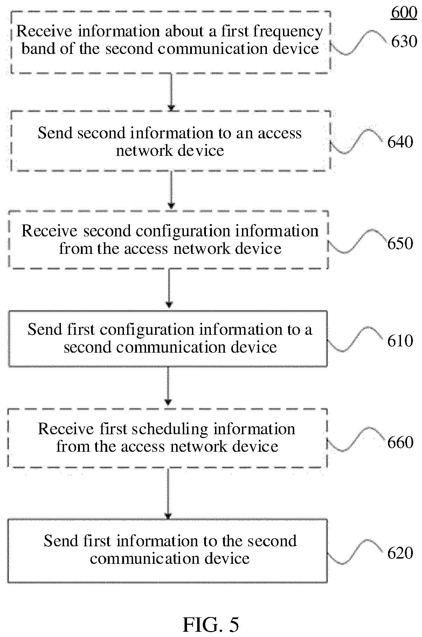

FIG. 5 is a schematic flowchart of a communication method 500 according to an embodiment of this application. The method may be performed by a terminal, or may be performed by a chip, a chip system, a processor, or the like that supports the terminal in implementing the method. The method may be performed by a server (for example, a cloud server), or may be performed by a chip, a chip system, a processor, or the like that supports the server in implementing the method. As shown in FIG. 5, the method 500 in this embodiment may include Part 510 and Part 520.

Part 510: Send first configuration information to a second communication device, where the first configuration information includes identifier information used by a first communication device and a configuration of a physical uplink shared channel PUSCH and/or a configuration of a physical downlink control channel PDCCH, and the first configuration information is used for communication between the second communication device and an access network device.

In Part 510, optionally, the identifier information used by the first communication device includes a cell radio network temporary identifier C-RNTI and/or a group identifier Group ID.

In a possible implementation of Part 510, the PUSCH configuration information (for example, which may be carried in a PUSCH-Config information element) in the first configuration information that is sent to the second communication device may be configured by the access network device based on an uplink capability of the second communication device, and includes a PUSCH time domain allocation mode, a format (format) configuration, a demodulation reference signal (demodulation reference signal, DMRS) configuration, and the like. An RNTI is for scrambling the PUSCH. The configuration of the PUSCH is configured by the access network device for a frequency band of the second communication device. Based on the configuration information, the second communication device may encode and scramble a PUSCH sent to the access network device, and forward encoded data to the access network device.

Optionally, the first configuration information sent to the second communication device may further include the PDCCH configuration information. Specifically, the PDCCH configuration information (for example, which may be carried in a PDCCH-Config information element) includes a control-resource set (control-resource set, CORESET), a search space (search space) configuration, and the like. An RNTI is for descrambling the PDCCH. The second communication device may receive a PDCCH from a radio access network device based on the PDCCH configuration information, and obtain, through decoding, DCI information, including uplink scheduling information UL grant, and assistance information that is required for sending data by UE, such as a slot format indicator (slot format indicator, SFI), a pre-emption indication (pre-emption indication, PI), and a power control command. The configuration of the PDCCH is configured by the access network device for a frequency band of the second communication device. Based on the configuration information, the second communication device may forward data from the first communication device to the access network device.

Part 520: Send first information to the second communication device, where the first information includes one or more of the following: uplink scheduling information, uplink transmission data, assistance information required for the uplink transmission data, and hybrid automatic repeat request HARQ process information, and the first information is used for the communication between the second communication device and the access network device.

In Part 520, optionally, the uplink transmission data comes from a media access control MAC layer of the first communication device, and is sent to the second communication device via a coordinating link between the first communication device and the second communication device.

Optionally, in a possible implementation of Part 520, if the first configuration information in Part 510 includes the PDCCH configuration information, after receiving a UL grant corresponding to a CC 2, the first communication device may send corresponding uplink data (in a TB form), UE assistance information, and HARQ process configuration information to a non-3GPP physical layer of the second communication device, for relaying the uplink transmission data by the second communication device. The UE assistance information indicates information such as an SFI, a PI, and a power control command. In this embodiment of this application, the HARQ information may include some necessary information that is delivered by the MAC layer to the physical layer, for example, a transport block size (transport block size, TBS), a redundancy version (redundancy version, RV), and a HARQ process ID.

Optionally, if the first configuration information in Part 510 does not include the PDCCH configuration information, the second communication device cannot obtain the DCI information through decoding, to obtain the uplink scheduling information UL grant. After receiving a UL grant corresponding to a CC 2, the first communication device may send the UL grant to a non-3GPP physical layer of the second communication device.

Optionally, the first communication device first sends the HARQ process configuration information to the second communication device, and then the second communication device sends a HARQ process ID with a TB to the radio access network device. The radio access network device may feed back a received packet loss status to the first communication device or the second communication device in a manner of feeding back signaling (for example, acknowledgement/negative acknowledgement, ACK/NACK).

Optionally, as shown in FIG. 5, the method 500 may further include Part 530, Part 540, Part 550, and Part 560.

Part 530: Receive information about a first frequency band of the second communication device, where the information about the first frequency band is uplink transmission frequency band information supported by the second communication device. The information about the first frequency band may be a carrier identifier or a carrier index. This is not specifically limited in this application.

In a possible implementation of Part 530, the second communication device sends uplink transmission capability information of the second communication device to a surrounding first communication device using a process similar to relay discovery. The first communication device may obtain information (which is mainly information about an ID of UE, and may further include indication information that indicates whether the UE is authorized to be used for coordination) about surrounding UE that may be used for coordination. The information about the ID is for identifying surrounding UE, in particular, in a scenario in which there are a plurality of second communication devices. The ID may be a C-RNTI of the second communication device, or may be a temporary ID allocated by the first communication device to the second communication device. This is not specifically limited in this application. The first communication device may further obtain an uplink capability (where the uplink capability mainly refers to an uplink CC of the UE, and may further include uplink transmission channel quality of the second communication device, service load information of the second communication device, and the like) of the surrounding UE that can be used for coordination, and select appropriate UE from the surrounding UE as the second communication device.

Optionally, the first communication device may find that there are a plurality of surrounding second communication devices that can provide coordination. The first communication device may select one or more surrounding second communication devices based on a service requirement of the first communication device, for example, a requirement on an uplink traffic volume, a transmission rate, or a latency. The first communication device may select an optimal second communication device based on signal quality of the second communication device on an uplink (Uu link), a traffic volume of the second communication device, a capability and quality of a coordinating link, and other information. For example, one or more second communication devices with optimal signal quality may be selected. Alternatively, a second communication device with low service load may be selected if possible. Alternatively, in a wireless coordinating link scenario, a second communication device with good coordinating link quality is selected. Alternatively, a second communication device with a high coordinating link transmission rate is selected from a preferentially connected link if possible.

Part 540: Send second information to the access network device, where the second information includes the information about the first frequency band of the second communication device and information about a second frequency band of the first communication device, and the information about the second frequency band is uplink transmission frequency band information supported by the first communication device. The information about the second frequency band may be a carrier identifier or a carrier index. A specific form of the information about the second frequency band is not specifically limited in this application.

In Part 540, optionally, the second information further indicates that the second frequency band is a primary component carrier. Specifically, the second information includes uplink transmission frequency band information formed by a component carrier CC 1 and a component carrier CC 2. In addition, the second information may alternatively indicate that the CC 1 of the first communication device is the primary component carrier (primary component carrier, PCC), and is for configuring a PUCCH by the radio access network device.

It may be understood that, in an existing CA technology, a CA capability of UE mainly refers to a combination of bands (which may be, for example, indicated in an information element BandCombination) that can be supported by the UE. For example, if the information element BandCombination indicates that the UE supports CA in a frequency band of n78, a gNodeB selects a cell from cells of n78 as a SCell of the UE. In this embodiment, because the CCs of the first communication device and the second communication device have been allocated, a CA capability reported herein is specific carrier information, including the cell carrier CC 1 of the first communication device and the cell carrier CC 2 of the second communication device.

In Part 540, optionally, the second information further includes a transmission latency between the first communication device and the second communication device. Specifically, if an ideal backhaul link (ideal backhaul) is not between the first communication device and the second communication device, the UE further needs to report the transmission latency between the first communication device and the second communication device, to learn of a shortest latency required from receiving a scheduling signaling by the first communication device to sending uplink data on the CC carrier of the second communication device, so that the radio access network device can know when to receive the scheduled uplink data. The transmission latency between the first communication device and the second communication device may include a transmission latency of the coordinating link between the first communication device and the second communication device, and a processing latency of relaying and forwarding the data by the second communication device after the second communication device receives the data. The foregoing latency may be included in UE capability reporting information and sent to the access network device. All different relay devices cooperating with the first communication device respectively correspond to latency information. The foregoing latency may alternatively be included in the UE assistance information and reported to a network-side device. A specific latency manner of reporting the latency is not specifically limited in this application.

Part 550: Receive second configuration information from the access network device, where the second configuration information includes one or more of the following: a bearer configuration, a configuration of a PUCCH, the configuration of the PUSCH, and the configuration of the PDCCH. The PUCCH configuration may include: a PUSCH resource set (PUCCH-ResourceSet), a PUCCH format configuration, a DMRS-related configuration, a power control parameter configuration, and the like. The configuration of the PDCCH may include: a CORESET, a search space configuration, other configuration information used for PDCCH detection, and the like. The second configuration information may be configured by the access network device based on the uplink capability of the second communication device, and is used for communication between the second communication device and the access network device.

Part 560: Receive first scheduling information from the access network device, where the first scheduling information includes the uplink scheduling information in the first information and the assistance information required for the uplink transmission data in the first information.

In a possible implementation of Part 560, the first communication device receives the PDCCH from the radio access network device, and obtains, through decoding, the DCI information, including the uplink scheduling information UL grant, and the assistance information that is required for sending data by UE, such as the SFI, the PI, and the power control command.

Optionally, the radio access network device may separately schedule the CC 1 and the CC 2, to be specific, separately indicate UL grants of the CC 1 and the second communication device via different DCI. Alternatively, the radio access network device may combine UL grants of the CC 1 and the second communication device into one piece of DCI, and deliver the DCI to the first communication device via the PDCCH. In the DCI, an application carrier indicator (carrier indicator) indicates a UL grant and other information of a corresponding CC.

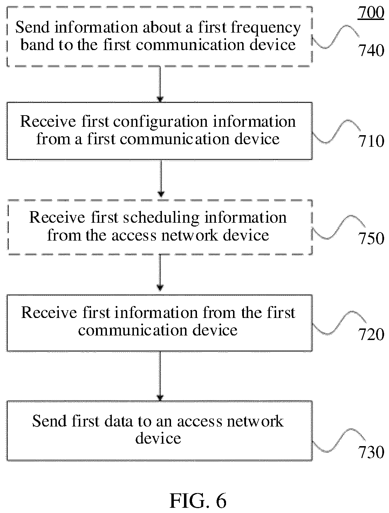

FIG. 6 is a schematic flowchart of a communication method 600 according to an embodiment of this application. The method may be performed by a terminal, or may be performed by a chip, a chip system, a processor, or the like that supports the terminal in implementing the method. The method may be performed by a server (for example, a cloud server), or may be performed by a chip, a chip system, a processor, or the like that supports the server in implementing the method. As shown in FIG. 6, the method 600 in this embodiment may include Part 610 and Part 620.

Part 610: Receive first configuration information from a first communication device, where the first configuration information includes identifier information used by the first communication device and a configuration of a PUSCH and/or a configuration of a PDCCH, and the first configuration information is used for communication between a second communication device and an access network device.

In Part 610, optionally, the identifier information used by the first communication device includes a cell radio network temporary identifier C-RNTI and/or a group identifier Group ID.

In a possible implementation of Part 610, the PUSCH configuration information (for example, which may be carried in a PUSCH-Config information element) in the first configuration information that is received from the first communication device may be configured by the access network device based on an uplink capability of the second communication device, and includes a PUSCH time domain allocation mode, a format configuration, a DMRS configuration, and the like. An RNTI is for scrambling the PUSCH. Based on the configuration information, the second communication device may encode and scramble a PUSCH sent to the access network device, and forward encoded data to the access network device.

Optionally, the first configuration information received from the first communication device may further include the PDCCH configuration information. Specifically, the PDCCH configuration information (for example, which may be carried in a PDCCH-Config information element) includes a CORESET, a search space configuration, and the like. An RNTI is for descrambling the PDCCH. The second communication device may receive a PDCCH from the radio access network device based on the PDCCH configuration information, and obtain, through decoding, DCI information, including uplink scheduling information UL grant, and assistance information that is required for sending data by UE, such as an SFI, a PI, and a power control command. Based on the configuration information, the second communication device may forward data from the first communication device to the access network device.

Part 620: Receive first information from the first communication device, where the first information includes one or more of the following: uplink scheduling information, uplink transmission data, assistance information required for the uplink transmission data, and hybrid automatic repeat request HARQ process information, and the first information is used for the communication between the second communication device and the access network device.

In Part 620, optionally, the uplink transmission data comes from a media access control MAC layer of the first communication device, and is sent to the second communication device via a coordinating link between the second communication device and the first communication device.

In Part 620, optionally, the uplink scheduling information, the uplink transmission data, the assistance information required for the uplink transmission data, and the hybrid automatic repeat request HARQ process information that are included in the first information may be sent by the first communication device to the second communication device via a same piece of first information, or may be sent by the first communication device to the second communication device via a plurality of pieces of first information.

Optionally, in a possible implementation of Part 620, if the first configuration information in Part 610 includes the PDCCH configuration information, after receiving a UL grant corresponding to a CC 2, the first communication device may send corresponding uplink data (in a TB form), UE assistance information, and HARQ process configuration information to a non-3GPP physical layer of the second communication device, for relaying the uplink transmission data by the second communication device. The UE assistance information indicates information such as an SFI, a PI, and a power control command.

Optionally, if the first configuration information in Part 610 does not include the PDCCH configuration information, the second communication device cannot obtain the DCI information through decoding, to obtain the uplink scheduling information UL grant. After receiving a UL grant corresponding to a CC 2, the first communication device may send the UL grant to a non-3GPP physical layer of the second communication device.

Optionally, the first communication device first sends the HARQ process configuration information to the second communication device, and then the second communication device sends a HARQ process ID with a TB to the radio access network device. The radio access network device may feed back a received packet loss status to the first communication device or the second communication device in an ACK/NACK manner.

Optionally, as shown in FIG. 6, the method 600 may further include Part 630, Part 640, and Part 650.

Part 630: Send the uplink transmission data to the access network device.

In Part 630, optionally, the uplink transmission data is obtained by the second communication device by performing physical layer processing on the uplink transmission data in the first information. The physical layer processing includes processes such as scrambling and encoding.

Part 640: Send information about a first frequency band to the first communication device, where the information about the first frequency band is uplink transmission frequency band information supported by the second communication device and is used for uplink transmission of the uplink transmission data.

In a possible implementation of Part 640, the second communication device sends the uplink transmission capability information of the second communication device to a surrounding first communication device. The first communication device may obtain information (which is mainly information about an ID of UE, and may further include indication information that indicates whether the UE is authorized to be used for coordination) about surrounding UE that may be used for coordination. The information about the ID is for identifying surrounding UE, in particular, in a scenario in which there are a plurality of second communication devices. The ID may be a C-RNTI of the second communication device, or may be a temporary ID allocated by the first communication device to the second communication device. This is not specifically limited in this application. The first communication device may further obtain an uplink capability (where the uplink capability mainly refers to an uplink CC of the UE, and may further include uplink transmission channel quality of the second communication device, service load information of the second communication device, and the like) of the surrounding UE that can be used for coordination, and select appropriate UE from the surrounding UE as the second communication device.

Part 650: Receive first scheduling information from the access network device, where the first scheduling information includes the uplink scheduling information and the assistance information required for the uplink transmission data.

In a possible implementation of Part 650, the second communication device receives the PDCCH from the radio access network device, and obtains, through decoding, the DCI information, including the uplink scheduling information UL grant, and the assistance information that is required for sending data by UE, such as the SFI, the PI, and the power control command.

Optionally, the radio access network device may separately schedule the CC 1 and the CC 2, to be specific, separately indicate UL grants of the CC 1 and the second communication device via different DCI. Alternatively, the radio access network device may combine UL grants of the CC 1 and the second communication device into one piece of DCI, and deliver the DCI to the first communication device via the PDCCH. In the DCI, an application carrier indicator (carrier indicator) indicates a UL grant and other information of a corresponding CC.

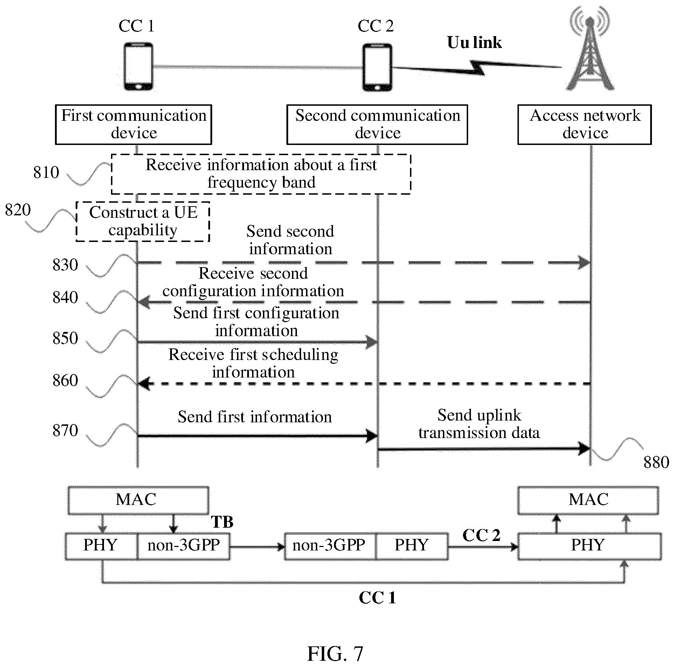

FIG. 7 is a schematic flowchart of a combination of the method 600 and the method 700, and includes the following steps.

Step 710: A first communication device receives information about a first frequency band from a second communication device, to obtain an uplink transmission capability of the second communication device on a Uu link.

Step 720: The first communication device constructs a UE capability. The first communication device constructs, based on a capability of a surrounding second communication device, an uplink capability of virtual UE formed by the first communication device and the second communication device, that is, an uplink CA capability of a CC 1 and a CC 2 in the figure.

Step 730: The first communication device reports the uplink CA capability to an access network device by sending second information, where reported content includes an uplink transmission resource formed by the foregoing component carrier CC 1 and CC 2, and a transmission latency between the first communication device and the second communication device.

Step 740: The access network device performs RRC reconfiguration, for example, bearer configuration between the access network device and the first communication device, bearer configuration between the access network device and the second communication device, physical channel PUCCH configuration, PDCCH configuration, and PUSCH configuration of the CC 1, and PDCCH configuration and PUSCH configuration of the CC 2, on the first communication device based on the capability reported by the first communication device. Configuration information is sent to the first communication device in a form of second configuration information.

Step 750: The first communication device sends PUSCH configuration information and an RNTI (for example, a C-RNTI) used by the first communication device to the second communication device via first configuration information.

Step 760: The first communication device receives first scheduling information of the access network device. The first scheduling information may be a PDCCH. The first communication device obtains, through decoding, DCI information, including uplink scheduling information UL grant and assistance information required for sending data by UE.

Step 770: The first communication device receives a UL grant corresponding to the CC 2, and sends the UL grant, corresponding uplink data (which is in a TB form), UE assistance information, and HARQ process configuration information to the second communication device via first information, for relaying the uplink transmission data by the second communication device.

Step 780: The second communication device relays and forwards the uplink transmission data of the first communication device to the access network device. A specific implementation may be as follows: A radio link physical layer of the second communication device performs a series of operations such as scrambling and encoding on the TB data, converts the TB data into a radio frequency signal, and sends the radio frequency signal to a physical layer of a base station via the Uu link of the second communication device.

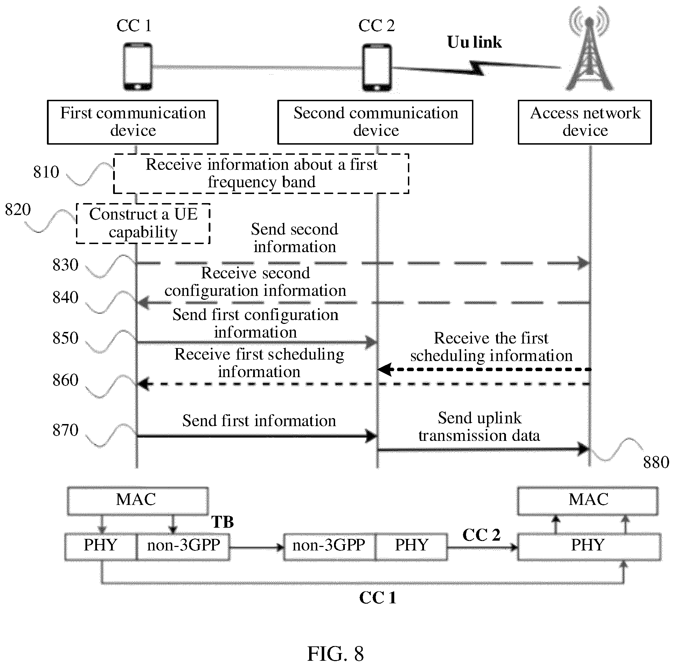

FIG. 8 is a schematic flowchart of a combination of the method 600 and the method 700, and includes the following steps.

Step 810 to step 840 are consistent with step 710 to step 740, and details are not described herein again.

Step 850: The first communication device sends an RNTI used by the first communication device, PUSCH configuration information, and PDCCH configuration information to the second communication device via first configuration information.

Step 860: Both the first communication device and the second communication device receive first scheduling information of the access network device, and obtain DCI information through decoding.

Step 870: The first communication device and the second communication device receive a UL grant corresponding to the CC 2, and the first communication device sends corresponding uplink data (which is in a TB form) and HARQ process configuration information to the second communication device via first information.

Step 880: The second communication device relays and forwards the uplink transmission data of the first communication device to the access network device. A specific implementation may be as follows: A radio link physical layer of the second communication device performs a series of operations such as scrambling and encoding on the TB data, converts the TB data into a radio frequency signal, and sends the radio frequency signal to a physical layer of a base station via the Uu link of the second communication device.

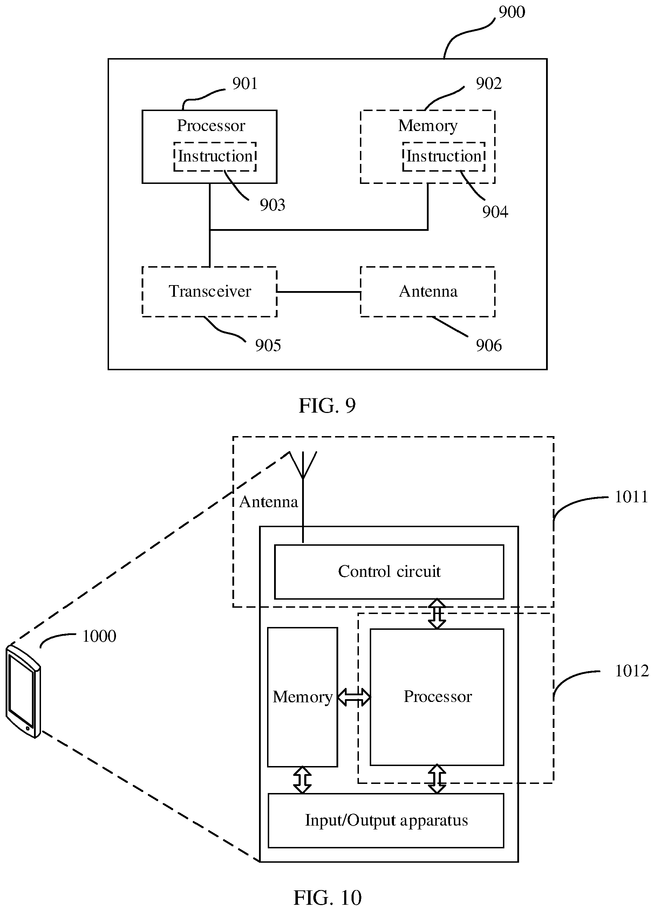

FIG. 9 is a schematic diagram of a structure of an apparatus. The apparatus 900 may be a network device, a terminal device, a server, or a centralized controller, or may be a chip, a chip system, a processor, or the like that supports the network device, the terminal device, the server, or the centralized controller in implementing the foregoing method. The apparatus may be configured to implement the method described in the foregoing method embodiment. For details, refer to the descriptions in the foregoing method embodiment.

The apparatus 900 may include one or more processors 901. The processor 901 may also be referred to as a processing unit, and may implement a specific control function. The processor 901 may be a general purpose processor, a dedicated processor, or the like, for example, may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a software program, and process data of the software program.

In an optional design, the processor 901 may store instructions and/or data 903, and the instructions and/or the data 903 may be run by the processor, to enable the apparatus 900 to perform the method described in the foregoing method embodiment.

In another optional design, the processor 901 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The foregoing transceiver circuit, interface, or interface circuit may be configured to read and write code/data. Alternatively, the foregoing transceiver circuit, interface, or interface circuit may be configured to transmit or transfer a signal.

In still another possible design, the apparatus 900 may include a circuit, and the circuit may implement a sending, receiving, or communication function in the foregoing method embodiments.

Optionally, the apparatus 900 may include one or more memories 902, and the memory 902 may store instructions 904. The instruction may be run on the processor, to enable the apparatus 900 to perform the method described in the foregoing method embodiment. Optionally, the memory may further store data. Optionally, the processor may alternatively store instructions and/or data. The processor and the memory may be separately disposed, or may be integrated together. For example, the correspondence described in the foregoing method embodiment may be stored in the memory, or stored in the processor.

Optionally, the apparatus 900 may further include a transceiver 905 and/or an antenna 906. The processor 901 may be referred to as a processing unit, and controls the apparatus 900. The transceiver 905 may be referred to as a transceiver unit, a transceiver machine, a transceiver circuit, a transceiver apparatus, a transceiver module, or the like, and is configured to implement a transceiver function.

Optionally, the apparatus 900 in this embodiment of this application may be configured to perform the method described in FIG. 5 or FIG. 6 in embodiments of this application.

The processor and the transceiver described in this application may be implemented on an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may also be manufactured using various IC process technologies, for example, complementary metal-oxide-semiconductor (complementary metal-oxide-semiconductor, CMOS), N-type metal-oxide-semiconductor (N-type metal-oxide-semiconductor, NMOS), P-type metal-oxide-semiconductor (P-type metal-oxide-semiconductor, PMOS), bipolar junction transistor (Bipolar Junction Transistor, BJT), bipolar CMOS (BiCMOS), silicon germanium (SiGe), and gallium arsenide (GaAs).

The apparatus described in the foregoing embodiment may be a network device or a terminal device. However, a scope of the apparatus described in this application is not limited thereto, and a structure of the apparatus may not be limited by FIG. 8. The apparatus may be an independent device or may be a part of a larger device. For example, the apparatus may be:
(1) an independent integrated circuit IC, or a chip, or a chip system or subsystem;
(2) a set having one or more ICs, where optionally, the IC set may also include a storage component configured to store data and/or instructions;
(3) an ASIC, such as a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like;
(6) others or the like.

FIG. 10 is a schematic diagram of a structure of a terminal device. The terminal device is applicable to the scenario shown in FIG. 1. For ease of description, FIG. 10 shows only main components of the terminal device. As shown in FIG. 10, the terminal device 1000 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and the data. The radio frequency circuit is mainly configured to: convert between a baseband signal and a radio frequency signal, and process the radio frequency signal. The antenna is mainly configured to receive and send a radio frequency signal in an electromagnetic wave form. The input/output apparatus, such as a touchscreen, a display screen, or a keyboard, is mainly configured to: receive data input by a user, and output data to the user.

After the terminal device is powered on, the processor may read the software program in the storage unit, parse and execute instructions of the software program, and process the data of the software program. When data needs to be sent wirelessly, the processor performs baseband processing on the to-be-sent data, and outputs a baseband signal to the radio frequency circuit. The radio frequency circuit processes the baseband signal to obtain a radio frequency signal, and sends the radio frequency signal in an electromagnetic wave form via the antenna. When data is sent to the terminal device, the radio frequency circuit receives a radio frequency signal via the antenna. The radio frequency signal is further converted into a baseband signal, and the baseband signal is output to the processor. The processor converts the baseband signal into data and processes the data.

For ease of description, FIG. 10 shows only one memory and one processor. In an actual terminal device, there may be a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process a communication protocol and communication data. The central processing unit is mainly configured to control the entire terminal device, execute a software program, and process data of the software program. The processor in FIG. 10 integrates functions of the baseband processor and the central processing unit. A person skilled in the art may understand that the baseband processor and the central processing unit may alternatively be independent processors, and are interconnected using a technology such as a bus. A person skilled in the art may understand that the terminal device may include a plurality of baseband processors to adapt to different network standards, the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a software program form, and the processor executes the software program to implement a baseband processing function.

In an example, an antenna and a control circuit that have a transceiver function may be considered as a transceiver unit 1011 of the terminal device 1000, and a processor that has a processing function may be considered as a processing unit 1012 of the terminal device 1000. As shown in FIG. 10, the terminal device 1000 includes the transceiver unit 1011 and the processing unit 1012. The transceiver unit may also be referred to as a transceiver, a transceiver machine, a transceiver apparatus, or the like. Optionally, a component that is in the transceiver unit 1011 and that is configured to implement a receiving function may be considered as a receiving unit, and a component that is in the transceiver unit 1011 and that is configured to implement a sending function may be considered as a sending unit. That is, the transceiver unit 1011 includes the receiving unit and the sending unit. For example, the receiving unit may also be referred to as a receiver, a receiving machine, a receiving circuit, or the like, and the sending unit may be referred to as a transmitter, a sending machine, a sending circuit, or the like. Optionally, the receiving unit and the sending unit may be one unit integrated together, or may be a plurality of units independent of each other. The receiving unit and the sending unit may be located in one geographical location, or may be distributed in plurality of geographical locations.

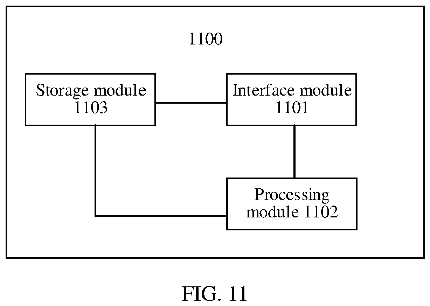

As shown in FIG. 11, another embodiment of this application provides an apparatus 1100. The apparatus may be a terminal, a network device, a server, or a centralized controller, or may be a component (for example, an integrated circuit or a chip) of the terminal, the network device, the server, or the centralized controller. Alternatively, the apparatus may be another communication module, configured to implement the method in the method embodiment of this application. The apparatus 1100 may include a processing module 1102 (or referred to as a processing unit). Optionally, the apparatus may further include an interface module 1101 (or referred to as a transceiver unit or a transceiver module) and a storage module 1103 (or referred to as a storage unit). The interface module 1101 is configured to implement communication with another device. The interface module 1101 may be, for example, the transceiver module or an input/output module.

In a possible design, one or more modules in FIG. 11 may be implemented by one or more processors, or implemented by one or more processors and memories, or implemented by one or more processors and transceivers, or implemented by one or more processors, memories, and transceivers. This is not limited in this embodiment of this application. The processor, the memory, and the transceiver may be separately disposed, or may be integrated.

The apparatus has a function of implementing the terminal described in embodiments of this application. For example, the apparatus includes a corresponding module, unit, or means (means) used for the terminal to perform the steps that are related to the terminal and that are described in embodiments of this application. The function, the unit, or the means (means) may be implemented by software or hardware, may be implemented by hardware by executing corresponding software, or may be implemented by a combination of software and hardware. For details, refer to corresponding descriptions in the foregoing corresponding method embodiment. Alternatively, the apparatus has a function of implementing the network device described in embodiments of this application. For example, the apparatus includes a corresponding module, unit, or means (means) used for the network device to perform the steps that are related to the network device and that are described in embodiments of this application. The function, the unit, or the means (means) may be implemented by software or hardware, may be implemented by hardware by executing corresponding software, or may be implemented by a combination of software and hardware. For details, refer to corresponding descriptions in the foregoing corresponding method embodiment.

Optionally, the modules in the apparatus 1100 in this embodiment of this application may be configured to perform the method described in FIG. 6 in embodiments of this application.

In a possible design, the apparatus 1100 may include the processing module 1102 and the interface module 1101. The interface module 1101 is configured to: send first configuration information to a second communication device. The first configuration information includes identifier information used by the first communication device and a configuration of a physical uplink shared channel PUSCH and/or a configuration of a physical downlink control channel PDCCH. The first configuration information is used for communication between the second communication device and an access network device. The interface module 1101 is further configured to: send first information to the second communication device. The first information includes one or more of the following: uplink scheduling information, uplink transmission data, assistance information required for the uplink transmission data, and hybrid automatic repeat request HARQ process information. The first information is used for the communication between the second communication device and the access network device.

In some possible implementations of the apparatus 1100, the identifier information used by the first communication device includes a cell radio network temporary identifier C-RNTI and/or a group identifier Group ID.

In some possible implementations of the apparatus 1100, the uplink transmission data comes from a media access control MAC layer of the first communication device, and is sent to the second communication device via a coordinating link between the first communication device and the second communication device.

In some possible implementations of the apparatus 1100, the interface module 1101 is further configured to: receive information about a first frequency band of a second communication device. The information about the first frequency band is uplink transmission frequency band information supported by the second communication device.

The interface module 1101 is further configured to: send second information to the access network device. The second information includes the information about the first frequency band of the second communication device and information about a second frequency band of the first communication device. The information about the second frequency band is uplink transmission frequency band information supported by the first communication device.

In some possible implementations of the apparatus 1100, the second information further indicates that the second frequency band is a primary component carrier.

In some possible implementations of the apparatus 1100, the second information further includes a transmission latency between the first communication device and the second communication device.

In some possible implementations of the apparatus 1100, the interface module 1101 is further configured to: receive second configuration information from the access network device. The second configuration information includes one or more of the following: a bearer configuration, a configuration of a PUCCH, the configuration of the PUSCH, and the configuration of the PDCCH.

In some possible implementations of the apparatus 1100, the interface module 1101 is further configured to: receive first scheduling information from the access network device. The first scheduling information includes the uplink scheduling information and the assistance information required for the uplink transmission data.

Optionally, the modules in the apparatus 1100 in this embodiment of this application may be configured to perform the method described in FIG. 7 in embodiments of this application.

In a possible design, the apparatus 1100 may include the processing module 1102 and the interface module 1101. The interface module 1101 is configured to: receive first configuration information from a first communication device. The first configuration information includes identification information used by the first communication device, and a configuration of a PUSCH and/or a configuration of a PDCCH. The first configuration information is used for communication between the second communication device and an access network device.

The interface module 1101 is further configured to: receive first information from the first communication device. The first information includes one or more of the following: uplink scheduling information, uplink transmission data, assistance information required for the uplink transmission data, and hybrid automatic repeat request HARQ process information. The first information is used for the communication between the second communication device and the access network device.

In some possible implementations of the apparatus 1100, the identifier information used by the first communication device includes a cell radio network temporary identifier C-RNTI and/or a group identifier Group ID.

In some possible implementations of the apparatus 1100, the uplink transmission data comes from a media access control MAC layer of the first communication device, and is sent to the second communication device via a coordinating link between the second communication device and the first communication device.

In some possible implementations of the apparatus 1100, the uplink transmission data in the first information is obtained by the second communication device by performing physical layer processing.

In some possible implementations of the apparatus 1100, the interface module 1101 is further configured to send information about a first frequency band to the first communication device. The information about the first frequency band is uplink transmission frequency band information supported by the second communication device, and is for transmitting uplink transmission data.

In some possible implementations of the apparatus 1100, the interface module 1101 is further configured to receive first scheduling information from the access network device. The first scheduling information includes the uplink scheduling information and the assistance information required for the uplink transmission data.

It may be understood that, in some scenarios, some optional features in embodiments of this application may be independently implemented without depending on another feature, for example, a solution on which the optional features currently are based, to resolve a corresponding technical problem and achieve a corresponding effect. Alternatively, in some scenarios, the optional features may be combined with another feature based on a requirement. Correspondingly, the apparatus provided in embodiments of this application may also correspondingly implement these features or functions. Details are not described herein.

A person skilled in the art may further understand that various illustrative logical blocks (illustrative logical blocks) and steps (steps) listed in embodiments of this application may be implemented by using electronic hardware, computer software, or a combination thereof. Whether the functions are implemented by using hardware or software depends on a particular application and a design requirement of the entire system. A person skilled in the art may use various methods to implement the functions for corresponding applications, but it should not be understood that the implementation goes beyond the protection scope of embodiments of this application.

It may be understood that the processor in embodiments of this application may be an integrated circuit chip, and has a signal processing capability. In an implementation process, steps in the foregoing method embodiments may be implemented by using an integrated logic circuit of hardware in the processor, or by using instructions in a software form. The foregoing processor may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

The solutions described in this application may be implemented in various manners. For example, these technologies may be implemented by using hardware, software, or a combination thereof. For hardware implementation, a processing unit configured to execute these technologies at a communication apparatus (for example, a base station, a terminal, a network entity, or a chip) may be implemented in one or more general purpose processors, a DSP, a digital signal processor device, an ASIC, a programmable logic device, an FPGA or another programmable logic apparatus, a discrete gate or a transistor logic, a discrete hardware component, or any combination thereof. The general purpose processor may be a microprocessor. Optionally, the general purpose processor may alternatively be any conventional processor, controller, microcontroller, or state machine. The processor may alternatively be implemented by a combination of computing apparatuses, for example, the digital signal processor and the microprocessor, a plurality of microprocessors, one or more microprocessors in combination with a digital signal processor core, or any other similar configuration.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitation, many forms of RAM are available, such as static random access memory (static RAM, SRAM), a dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchlink dynamic random access memory (synchlink DRAM, SLDRAM), and direct rambus random access memory (direct rambus RAM, DR RAM). It should be noted that the memory of the system and methods described in this specification includes but is not limited to these memories and any memory of another proper type.

This application further provides a computer-readable medium, where the computer-readable medium stores a computer program, and when the computer program is executed by a computer, a function of any one of the foregoing method embodiments is implemented.

This application further provides a computer program product. When the computer program product is executed by a computer, a function of any one of the foregoing method embodiments is implemented.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any suitable manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It should be understood that, in this application, "when" and "if" mean that an apparatus performs corresponding processing in an objective situation, are not intended to limit time, do not require that the apparatus has a determining action during implementation, and do not mean any other limitation.

"Simultaneously" in this application may be understood as being at a same time point, or may be understood as being within a time period, or may be understood as being within a same periodicity. This may be specifically understood with reference to the context.

A person skilled in the art may understand that various numbers such as "first" and "second" in this application are merely used for differentiation for ease of description, and are not used to limit the scope of embodiments of this application. A specific value of a number (which may also be referred to as an index), a specific value of a quantity, and a position in this application are merely used as examples, but are not unique representation forms, and are not used to limit the scope of embodiments of this application. Various numbers such as "1st" and "2nd" in this application are also merely used for differentiation for ease of description, and are not used to limit the scope of embodiments of this application.

In this application, an element represented by using a singular number is intended to represent "one or more" instead of " only one", unless otherwise specified. In this application, "at least one" is intended to represent "one or more", and "a plurality of" is intended to represent "two or more", unless otherwise specified.

In addition, the terms "system" and "network" in this specification may be used interchangeably in this specification. The term "and/or" in this specification describes only an association relationship between associated objects and represents that three relationships may exist. For example, A and/or B may represent the following three cases: only A exists, both A and B exist, and only B exists. A may be singular or plural, and B may be singular or plural. The character "/" usually indicates an "or" relationship between the associated objects.

The term "at least one of" in this specification indicates all combinations or any combination of listed items. For example, "at least one of A, B, and C" may indicate the following six cases: only A exists, only B exists, only C exists, A and B coexist, B and C coexist, and A, B, and C coexist. A may be singular or plural, B may be singular or plural, and C may be singular or plural.

It should be understood that in embodiments of this application, "B corresponding to A" represents that B is associated with A, and B may be determined based on A. However, it should be further understood that determining B based on A does not mean that B is determined based only on A. B may alternatively be determined based on A and/or other information.

"Predefine" in this application may be understood as "define", "predefine", "store", "pre-store", "pre-negotiate", "pre-configure", "solidify", or "pre-burn".

A person of ordinary skill in the art may understand that units and algorithm steps in the examples described with reference to embodiments disclosed in this specification can be implemented by electronic hardware or a combination of computer software and electronic hardware. Whether these functions are executed in a hardware or software manner depends on a specific application and a design constraint condition of technical solutions. A person skilled in the art may use different methods to implement the described functions for each specific application. However, it should not be considered that this implementation goes beyond the scope of this application.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, the apparatuses, and the methods described in this application may alternatively be implemented in another manner. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be through some interfaces, and indirect couplings or communication connections of the apparatuses or units may be in an electrical, a mechanical, or another form.

The units described as separate components may or may not be physically separate, and components displayed as units may or may not be physical units, that is, may be located in one place, or may be distributed on a plurality of network units. Some or all of the units may be selected based on an actual requirement to achieve the objectives of the solutions in embodiments.

In addition, functional units in embodiments of this application may be integrated into one processing unit, or each unit may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes media such as a USB flash drive, a removable hard disk, a read-only memory (read-only memory, ROM), a random access memory (random access memory, RAM), a magnetic disk, an optical disc, or the like, that can store program code.

For same or similar parts in embodiments of this application, reference may be made to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing implementations of this application do not constitute a limitation on the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, wherein the method is applied to a first communication device, and the method comprises:
sending first configuration information to a second communication device, wherein the first configuration information comprises identifier information used by the first communication device and a configuration of a physical uplink shared channel PUSCH and/or a configuration of a physical downlink control channel PDCCH, and the first configuration information is used for communication between the second communication device and an access network device; and
sending first information to the second communication device, wherein the first information comprises one or more of the following: uplink scheduling information, uplink transmission data, assistance information required for the uplink transmission data, and hybrid automatic repeat request HARQ process information, and the first information is used for the communication between the second communication device and the access network device.

2. The method according to claim 1, wherein the identifier information used by the first communication device comprises a cell radio network temporary identifier C-RNTI and/or a group identifier Group ID.

3. The method according to claim 1 or 2, wherein the uplink transmission data comes from a media access control MAC layer of the first communication device, and is sent to the second communication device via a coordinating link between the first communication device and the second communication device.

4. The method according to any one of claims 1 to 3, wherein the method further comprises:
receiving information about a first frequency band of the second communication device, wherein the information about the first frequency band is uplink transmission frequency band information supported by the second communication device; and
sending second information to the access network device, wherein the second information comprises the information about the first frequency band of the second communication device and information about a second frequency band of the first communication device, and the information about the second frequency band is uplink transmission frequency band information supported by the first communication device.

5. The method according to claim 4, wherein the second information further indicates that the second frequency band is a primary component carrier.

6. The method according to claim 4 or 5, wherein the second information further comprises a transmission latency between the first communication device and the second communication device.

7. The method according to any one of claims 1 to 6, wherein the method further comprises:
receiving second configuration information from the access network device, wherein the second configuration information comprises one or more of the following: a bearer configuration, a configuration of a PUCCH, the configuration of the PUSCH, and the configuration of the PDCCH.

8. The method according to any one of claims 1 to 7, wherein the method further comprises:
receiving first scheduling information from the access network device, wherein the first scheduling information comprises the uplink scheduling information and the assistance information required for the uplink transmission data.

9. A communication method, wherein the method is applied to a second communication device, and the method comprises:
receiving first configuration information from a first communication device, wherein the first configuration information comprises identifier information used by the first communication device and a configuration of a PUSCH and/or a configuration of a PDCCH, and the first configuration information is used for communication between the second communication device and an access network device; and
receiving first information from the first communication device, wherein the first information comprises one or more of the following: uplink scheduling information, uplink transmission data, assistance information required for the uplink transmission data, and hybrid automatic repeat request HARQ process information, and the first information is used for the communication between the second communication device and the access network device.

10. The method according to claim 9, wherein the identifier information used by the first communication device comprises a cell radio network temporary identifier C-RNTI and/or a group identifier Group ID.

11. The method according to claim 9 or 10, wherein the uplink transmission data comes from a media access control MAC layer of the first communication device, and is sent to the second communication device via a coordinating link between the second communication device and the first communication device.

12. The method according to claim 9, wherein the uplink transmission data in the first information is obtained by the second communication device through physical layer processing.

13. The method according to any one of claims 9 to 12, wherein the method further comprises:
sending information about a first frequency band to the first communication device, wherein the information about the first frequency band is uplink transmission frequency band information supported by the second communication device, and is for transmitting the uplink transmission data.

14. The method according to any one of claims 9 to 13, wherein the method further comprises:
receiving first scheduling information from the access network device, wherein the first scheduling information comprises the uplink scheduling information and the assistance information required for the uplink transmission data.

15. A communication apparatus, comprising a processing module and an interface module, wherein
the interface module is configured to: send first configuration information to a second communication device, wherein the first configuration information comprises identifier information used by the first communication device and a configuration of a physical uplink shared channel PUSCH and/or a configuration of a physical downlink control channel PDCCH, and the first configuration information is used for communication between the second communication device and an access network device; and
send first information to the second communication device, wherein the first information comprises one or more of the following: uplink scheduling information, uplink transmission data, assistance information required for the uplink transmission data, and hybrid automatic repeat request HARQ process information, and the first information is used for the communication between the second communication device and the access network device.

16. A communication apparatus, comprising a processing module and an interface module, wherein
the interface module is configured to: receive first configuration information from a first communication device, wherein the first configuration information comprises identifier information used by the first communication device and a configuration of a PUSCH and/or a configuration of a PDCCH, and the first configuration information is used for communication between the second communication device and an access network device; and
the interface module is further configured to: receive first information from the first communication device, wherein the first information comprises one or more of the following: uplink scheduling information, uplink transmission data, assistance information required for the uplink transmission data, and hybrid automatic repeat request HARQ process information, and the first information is used for the communication between the second communication device and the access network device.

17. A communication apparatus, comprising a processor, wherein the processor is coupled to a memory, the memory is configured to store a program or instructions, and when the program or the instructions are executed by the processor, the apparatus is enabled to perform the method according to any one of claims 1 to 14.

18. A computer-readable storage medium, wherein the computer-readable storage medium stores a computer program or instructions, and when the computer program or the instructions are executed by a computing device, the computing device is enabled to perform the method according to any one of claims 1 to 14.

19. A computer program product comprising instructions, wherein when the computer program product runs on a computing device, the computing device performs the method according to any one of claims 1 to 14.

20. A communication system, comprising the apparatus according to claim 15 and the apparatus according to claim 16.
